# EUROPÄISCHE PATENTSCHRIFT

(11) **EP 1 769 949 B1**
(45) Veröffentlichungstag und Bekanntmachung des Hinweises auf die Patenterteilung: **06.05.2009**
(21) Anmeldenummer: 06120594.4
(22) Anmeldetag: 13.09.2006
(51) Int. Cl.: B60D 1/00, A01B 59/06

(54) **Kupplungssystem zur Herstellung einer trennbaren Verbindung zwischen einem Fahrzeug und einem Arbeitsgerät**
Coupling system for realising a separable conection between a vehicle and a work implement
Système d'accrochage pour réaliser un accouplement séparable entre un véhicule et un outil de travail

(30) Priorität: 29.09.2005 DE 102005046575
(43) Veröffentlichungstag der Anmeldung: 04.04.2007
(73) Patentinhaber: Deere & Company, Moline, IL 61265-8098 (US)
(72) Erfinder: Tarasinski, Nicolai, 67227 Frankenthal (DE); Gugel, Rainer, 68163 Mannheim (DE); Nordhoff, Hendrik, 48329 Havixbeck (DE); Kneer, Bernd, 68519 Viernheim (DE); Bradl, Joachim, 69198 Schriesheim (DE)
(74) Vertreter: Magin, Ludwig Bernhard

(56) Entgegenhaltungen:
- EP-A- 0 331 563
- US-A- 2 645 878
- US-A- 4 302 026

## Beschreibung

Die Erfindung betrifft ein Kupplungssystem zur Herstellung einer trennbaren Verbindung zwischen einem Fahrzeug und einem Arbeitsgerät oder einem anderen Fahrzeug oder einem Fahrzeugteil oder zwischen Fahrzeugteilen, mit einem fahrzeugseitigen Kupplungselement und einem arbeitsgeräteseitigen Kupplungselement, die lösbar miteinander verbindbar sind.

### Stand der Technik

Im Stand der Technik ist es üblich, selbst fahrende landwirtschaftliche Fahrzeuge, wie Traktoren, Trägerfahrzeuge, Zugmaschinen oder Erntemaschinen, lösbar mit Arbeitsgeräten zu verbinden, bei denen es sich beispielsweise um Bodenbearbeitungsgeräte, Sämaschinen, Düngerstreuer, Feldspritzen, Ballenpressen, Anhänger oder Erntevorsätze handeln kann. Durch die Trennbarkeit kann ein Fahrzeug mit unterschiedlichen Arbeitsgeräten verbunden werden und es besteht die Möglichkeit, die Kombination im getrennten Zustand Platz sparend abzustellen oder zu transportieren. Die Verbindung erfolgt derzeit auf mechanische Weise, wobei üblicherweise bewegliche mechanische Verbindungselemente vorgesehen sind, beispielsweise Kupplungsbolzen o. dgl., die sich durch Öffnungen in geeigneten Kupplungselementen erstrecken, von denen eines fest mit dem Fahrzeug und das andere fest mit dem Arbeitsgerät verbunden ist, oder durch die Schwerkraft, die das Arbeitsgerät mittels Haken o. ä. am Fahrzeug festhält. Die Bewegung der Verbindungselemente kann durch fremdkraftgesteuerte Aktuatoren erfolgen, damit der Bediener nicht zum An- und Abbau des Arbeitsgeräts seinen Arbeitsplatz verlassen muss. Beispiele für derartige mechanische Verbindungen sind in der DE 196 13 657 A und DE 44 12 116 A und US 4 302 026, US 2 645 878 wiedergegeben.

Ein Nachteil der bekannten mechanischen Verbindungen zwischen Fahrzeugen und Arbeitsgeräten liegt in Kompatibilitätsproblemen, da die Abmessungen der Kupplungselemente von Fahrzeug und Arbeitsgerät hinreichend genau zusammenpassen müssen. Weiterhin können die Verbindungs- und Kupplungselemente nach längerem Gebrauch verschleißen, so dass sie sich nicht mehr problemlos trennen oder verbinden lassen und auszutauschen sind.

### Aufgabe der Erfindung

Die der Erfindung zu Grunde liegende Aufgabe wird darin gesehen, ein gegenüber dem Stand der Technik verbessertes Kupplungssystem zur Herstellung einer trennbaren Verbindung zwischen einem selbst fahrenden Fahrzeug und einem Arbeitsgerät bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, eines der Kupplungselemente mit einem ein- und ausschaltbaren Magneten auszustatten und das andere Kupplungselement mit einem ferromagnetischem Material zu versehen. Die Kupplungselemente werden demnach im gekuppelten Zustand, in dem der Magnet eingeschaltet ist und die Kupplungselemente einander berühren bzw. hinreichend nahe aneinander angeordnet sind, magnetisch aneinander fixiert. Ist der Magnet ausgeschaltet, können die Kupplungselemente voneinander getrennt werden.

Auf diese Weise erhält man ein Kupplungssystem, das durch die magnetische Fixierung eine hohe Genauigkeit der Position der Kupplungselemente zueinander und ihre spielfreie Anbringung ermöglicht. Es ist verschleißarm, da im gekoppelten Zustand keine mechanische Bewegung zwischen den Kupplungselementen auftritt, und setzt sich aus nur wenigen Teilen zusammen. Die Form und Abmessungen des mit ferromagnetischem Material ausgestatteten Kupplungselements sind grundsätzlich beliebig, so dass Kompatibilitätsprobleme nicht zu befürchten sind. Weiterhin realisiert das Kupplungssystem eine Überlastsicherung, da die Kupplungselemente sich beim Überschreiten einer vorbestimmten übertragenen Kraft selbsttätig voneinander trennen.

Das erfindungsgemäße Kupplungssystem wird in einer möglichen Anwendung verwendet, um mehrere Fahrzeuge oder Fahrzeugteile miteinander zu verbinden und so beispielsweise die Gesamtzugkraft, die Tragfähigkeit oder die Gesamtleistung zu erhöhen. Das Kupplungssystem kann auch verwendet werden, um ein insbesondere landwirtschaftliches Fahrzeug, wie ein Traktor, ein Trägerfahrzeug, eine Zugmaschine oder eine selbst fahrende oder gezogene oder angebaute Erntemaschine mit einem Arbeitsgerät zu verbinden, beispielsweise einem Bodenbearbeitungsgerät, einer Sämaschine, einem Düngerstreuer, einer Feldspritze, einer Ballenpresse, einem Anhänger oder einem Erntevorsatz.

Es bietet sich an, das fahrzeugseitige Kupplungselement mit dem Magneten und das arbeitsgeräteseitige Kupplungselement mit dem ferromagnetischen Material auszustatten. Dadurch erspart man sich eine Verbindung zum Arbeitsgerät, um die Energie für den Magneten zu übertragen.

In einer bevorzugten Ausführungsform sind zusätzliche, formschlüssig wirkende Positionierhilfen zwischen den beiden Kupplungselementen vorgesehen. Sie bieten dem Fahrer vor dem Kuppeln eine Hilfe beim Positionieren der Kupplungselemente, stellen beim Einschalten des Magneten eine definierte Lage der Kupplungselemente zueinander sicher und können einen Teil der beim Betrieb auftretenden Kräfte übertragen, insbesondere die quer zur den aneinander anliegenden Oberflächen (Magnetpole) der Kupplungselemente verlaufenden Komponenten. Die Positionierhilfen können als Kanten, Stufen, Stifte, Keile, Kegelstümpfe oder in beliebiger anderer Form ausgeführt sein.

Als ein- und ausschaltbarer Magnet kann ein Elektromagnet dienen. Solange er bestromt ist, hält er das andere Kupplungselement fest. Wird der ihn durchfließende Strom ausgeschaltet, wird das andere Kupplungselement nicht mehr festgehalten; die Kupplung ist aufgetrennt. Bei einer anderen Ausführungsform findet ein so genannter Elektropermanentmagnet Verwendung, der einen Permanentmagneten umfasst, der zum Trennen der Kupplung temporär durch ein mit einem Elektromagneten hergestelltes Magnetfeld entmagnetisiert wird. Derartige Elektropermanentmagnete sind in der Regel aus einer Neodym-Eisen-Bor-Legierung oder einer anderen geeignten Legierung hergestellt und an sich von magnetischen Hubeinrichtungen her bekannt, s. US 6 104 270 A, deren Offenbarung durch Verweis mit in die vorliegenden Unterlagen aufgenommen wird. Diese Elektropermanentmagnete haben den Vorteil, dass Hilfsenergie (Strom) nur zum An- und Abkuppeln, nicht aber zum Halten der Kupplung erforderlich ist. Dadurch wird eine hohe Sicherheit gegen unbeabsichtigtes Lösen gewährleistet. Eine weitere Möglichkeit besteht darin, einen oder mehrere mechanisch bewegten Permanentmagneten als ein- und ausschaltbaren Magneten zu verwenden. Er kann durch einen fremdkraftbetätigten Aktuator gegenüber der Oberfläche des zugehörigen Kupplungselements, an der das andere Kupplungselement anliegt, mechanisch verdreht oder verschoben werden, um die magnetische Fixierung des anderen, ferromagnetischen Kupplungselements herzustellen bzw. zu lösen.

Durch eine Verschmutzung der aneinander zum Anliegen kommenden Oberflächen (Magnetpole) der Kupplungselemente kann der Luftspalt zwischen den Magnetpolen über einen zulässigen Wert vergrößert und damit die übertragbare Haltekraft vermindert werden. Es bietet sich daher an, einen Sensor zur Überprüfung des Luftspalts zwischen den Magnetpolen bereitzustellen, der den Abstand direkt messen kann, oder die magnetische Flussdichte im Magnetkreis erfasst, der durch den Magneten und das ferromagnetische Kupplungselement gebildet wird. Eine Überschreitung des Höchstabstandes oder die Unterschreitung der Mindestflussdichte kann über eine mit dem Sensor verbundene Steuerung eine Warnung an den Bediener des Fahrzeugs und/oder eine Sicherheitsfunktion, z. B. eine selbsttätige Stillsetzung des Fahrantriebs des Fahrzeugs, auslösen.

Die Flussdichte des Magneten kann in Stufen variierbar sein, um unterschiedlich große Haltekräfte bereitzustellen. Es wäre beispielsweise denkbar, eine geringere Haltekraft zu verwenden, wenn ein kleines bzw. leichtes Arbeitsgerät mit dem Fahrzeug verbunden ist, was im Fall der Verwendung eines Elektromagneten Hilfsenergie einspart, während die größere Flussdichte und Haltekraft bei größeren Arbeitsgeräten verwendet wird.

Um ein unbeabsichtigtes Lösen der Kupplung zu vermeiden, bietet es sich an, die Flussdichte zunächst auf einen niedrigeren Wert zu bringen und dann einen Haltekrafttest durchzuführen, z. B. indem das Arbeitsgerät angehoben oder über eine bestimmte Strecke gezogen wird. Das kann erfolgen, indem eine Steuerung über eine Ausgabeeinrichtung selbsttätig eine entsprechende Anweisung an den Fahrer gibt. Möglich ist auch, dass die Steuerung den Haltekrafttest selbsttätig durchführt, indem sie die zugehörigen Aggregate der Maschine zur Durchführung des Haltetests ansteuert. Dem Fahrer kann eine Information über die selbsttätig durchgeführten Vorgänge gegeben werden. Bei erfolgreichem Ausgang des Haltekrafttests, über den der Steuerung durch Signale eines geeigneten Sensors, z. B. einer der oben erwähnten Sensoren zur Erfassung des Luftspalts, eine Information zugeführt wird, wird die Flussdichte dann selbsttätig durch die Steuerung auf einen zweiten, größeren Wert gebracht und damit eine definierte Sicherheit gegen unbeabsichtigtes Lösen gewährleistet.

Alternativ oder zusätzlich ist ein Mechanismus vorgesehen, der beispielsweise einen hydraulischen Zylinder umfasst und durch vorübergehendes Aufbringen einer Testkraft, die größer als die zu erwartende Betriebskraft ist, versucht, die magnetische Verbindung zu trennen. Gelingt dies nicht, ist die erforderliche Sicherheit gegen unbeabsichtigtes Lösen gewährleistet.

In einer bevorzugten Ausführungsform wird der Ankupplungsvorgang oder der Abkupplungsvorgang zwischen dem fahrzeugseitigen Kupplungselement und dem arbeitsgeräteseitigen Kupplungselement durch das Magnetfeld eines Magneten begünstigt, unterstützt und/oder bewirkt. Somit könnte vorgesehen sein, dass das Magnetfeld des Magneten lediglich für den Kupplungsvorgang, nämlich zum Ankuppeln und/oder zum Abkuppeln, benötigt wird. Sobald der Kupplungsvorgang abgeschlossen ist, könnte in diesem Fall das Magnetfeld abgeschaltet werden. Es ist allerdings auch denkbar, den gekuppelten Zustand der Kupplungselemente durch das Magnetfeld des Magneten vollständig oder zumindest unterstützend aufrecht zu erhalten. Insoweit kann es sich bei dem Magneten um einen Elektromagneten handeln, der für den Ankupplungsvorgang oder den Abkopplungsvorgang jeweils aktiviert wird. Alternativ kann ein Permanentmagnet vorgesehen sein, mit dessen Magnetfeld die beiden Kupplungselemente aneinander magnetisch fixierbar sind. Mit einem in Form eines Elektromagneten ausgebildeten Magneten kann das Magnetfeld des Permanentmagnets zumindest weitgehend neutralisiert oder verstärkt werden, um den Kupplungsvorgang durchzuführen.

Nun könnte der Ankupplungsvorgang der Kupplungselemente dadurch realisiert werden, dass das fahrzeugseitige Kupplungselement an das arbeitsgeräteseitige Kupplungselement angenähert wird. Dies könnte beispielsweise dadurch erzielt werden, dass das Fahrzeug rückwärts an das Arbeitsgerät herangefahren wird. Sobald die beiden Kupplungselemente aneinander angenähert sind, wird das Kupplungselement, welches das ferromagnetische Material aufweist, bei aktiviertem Magneten bzw. vorliegendem Magnetfeld von dem Kupplungselement angezogen, welches den Magneten aufweist. Vorzugsweise ist das gegenseitige magnetische Anziehen der beiden Kupplungselemente derart ausgestaltet, dass die beiden Kupplungselemente vollständig aneinander fixiert sind. Hierbei könnte vorgesehen sein, das Magnetfeld in seiner Polarisation und/oder Magnetfeldstärke zu variieren. Damit der Annäherungsvorgang der beiden Kupplungselemente unterstützt oder begünstigt wird, könnte bevorzugt mindestens ein Führungsmittel vorgesehen sein. Mit einem solchen Führungsmittel, welches beispielsweise eine im Bereich des fahrzeugseitigen Kupplungselements angeordnete Verstrebung, Platte oder ähnliche Bauteile aufweisen könnte, wird eine Annäherung der beiden Kupplungselemente derart geführt, dass die beiden Kupplungselemente zumindest nahezu in ihre endgültige Kupplungsposition bringbar sind.

In einer bevorzugten Ausführungsform ist vorgesehen, dass die Kupplungselemente mechanisch aneinander fixierbar sind. Hierzu könnte beispielsweise ein elektromagnetisch, mechanisch oder hydraulisch betätigbarer Sicherungsbolzen fahrzeugseitig vorgesehen sein, welcher vergleichbar zu einer Zugösen-Kupplung, in eine entsprechende arbeitsgeräteseitig vorgesehene Ausnehmung eingreift, falls die Kupplungselemente aneinander fixiert sind. Bei einer solchen Ausbildung des Kupplungssystems bzw. der Kupplungselemente ist ein (aktiv vorliegendes) Magnetfeld nicht zwingend erforderlich, um die beiden Kupplungselemente im gekuppelten Zustand aneinander zu halten. In diesem Fall könnten demgemäß nach hergestellter Kupplung zwischen den Kupplungselementen der Magnet ausgeschaltet werden.

Der Abkopplungsvorgang könnte durch ein Aktivieren des Magnets eingeleitet oder bewirkt werden, und zwar derart, dass eine Abstoßungskraft zwischen fahrzeugseitigem Kupplungselement und arbeitsseitigem Kupplungselement wirkt, so dass die Kupplungselemente durch die Abstoßungskraft voneinander abkuppelbar sind. Dementsprechend könnte beispielsweise das eine Kupplungselement permanentmagnetisch ausgebildet sein und das andere Kupplungselement einen Elektromagneten aufweisen, welcher derart aktiviert wird, dass zwischen dem Elektromagneten und dem Permanentmagneten eine abstoßende Kraft wirkt.

Es könnte ein weiterer Magnet vorgesehen und derart ausgebildet bzw. angeordnet sein, dass eine mechanische Fixierung der Kupplungselemente durch Aktivierung des weiteren Magnets lösbar oder zumindest begünstigbar ist. So könnte beispielsweise mit dem weiteren Magneten eine mechanische Hakenverbindung durch das Anheben des den Haken aufweisenden Kupplungselements gelöst werden, so dass der Haken aus der entsprechenden Ausnehmung bzw. Öse herausgehoben wird. Weiterhin könnte ein eventuell vorgesehener Sicherungsbolzen mechanisch oder hydraulisch derart betätigt werden, dass eine rein mechanische Fixierung der beiden Kupplungselemente gelöst wird.

### Ausführungsbeispiel

In den Zeichnungen ist ein nachfolgend näher beschriebenes Ausführungsbeispiel der Erfindung dargestellt. Es zeigt:
- Fig. 1: eine schematische seitliche Ansicht eines Fahrzeugs und eines Arbeitsgeräts, die durch ein Kupplungssystem lösbar miteinander verbunden sind, und
- Fig. 2: eine schematische seitliche Ansicht des Kupplungssystems aus Figur 1.

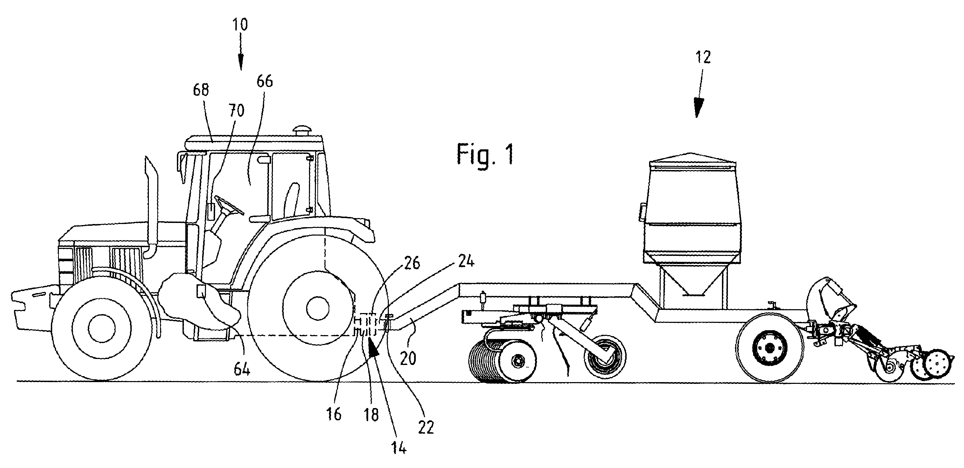

In der Figur 1 ist ein landwirtschaftliches Fahrzeug 10 in Form eines Traktors und ein durch ein Kupplungssystem 14 daran befestigtes Arbeitsgerät 12 in Form einer Bestellkombination dargestellt. Das Fahrzeug 10 ist an seiner Rückseite mit einem Träger 16 versehen, an der ein fahrzeugseitiges, erstes Kupplungselement 18 befestigt ist. Das Arbeitsgerät 12 umfasst eine sich nach vorn erstreckende Deichsel 20, die über ein Gelenk 22 mit vertikal verlaufender Schwenkachse mit einem Träger 24 verbunden ist, an dessen Vorderseite ein arbeitsgeräteseitiges, zweites Kupplungselement 26 angeordnet ist. Die Kupplungselemente 18, 26 des Kupplungssystems 14 stellen eine lösbare Verbindung zwischen dem Fahrzeug 10 und dem Arbeitsgerät 12 bereit.

Soll das Arbeitsgerät 12 starr am Fahrzeug 10 angebracht werden, wie bei Pflügen oder Düngerstreuern, entfällt selbstverständlich das Gelenk 22. Es wäre auch möglich, das Gelenk 22 zwischen dem Träger 16 und dem Kupplungselement 18 anzubringen und es in Geradeausstellung arretierbar zu gestalten, um wahlweise lenkbare Arbeitsgeräte 12, wie die dargestellte Bestellkombination, und starr anzubringende Arbeitsgeräte am Fahrzeug 10 anbringen zu können. Bei verstellbaren Schnittstellen, z. B. Dreipunktschnittstellen, zwischen dem Fahrzeug 10 und dem Arbeitsgerät 12 könnten auch mehrere Kupplungssysteme 14 der dargestellten Art an den Anbringungspunkten des Arbeitsgeräts am Fahrzeug vorgesehen sein.

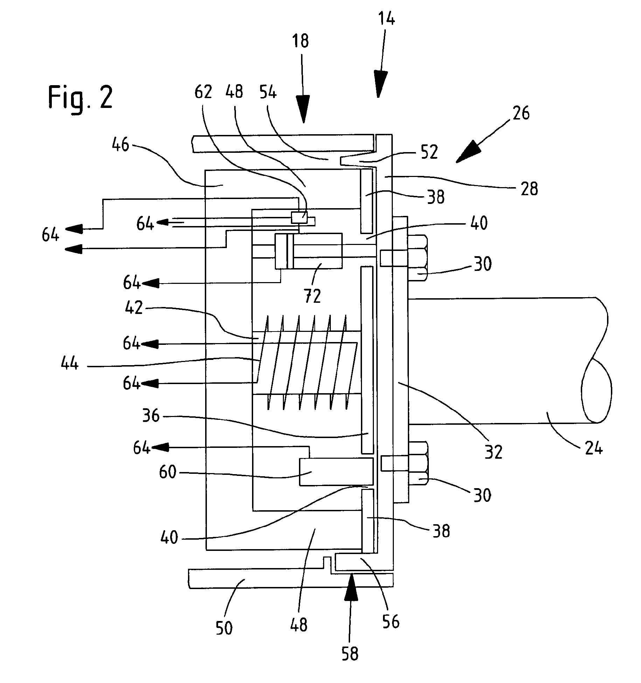

In der Figur 2 ist das Kupplungssystem 14 detaillierter dargestellt. Das arbeitsgerätseitige Kupplungselement 26 umfasst eine Platte 28 aus ferromagnetischem Material, insbesondere Eisen. Sie könnte auch aus Kobalt, Nickel oder einer ferromagnetischen Legierung hergestellt sein. Die Platte 28 ist durch Schrauben 30, die sich in Sacklöcher in der Platte 28 erstrecken, mit einem Flansch 32 verbunden, der wiederum an der Stirnseite des Trägers 24 befestigt, z. B. angeschweißt ist.

Das fahrzeugseitige Kupplungselement 18 umfasst eine mittlere, kreisförmige Platte 36 aus ferromagnetischem Material, um die sich eine äußere Platte 38 aus ferromagnetischem Material ringförmig erstreckt. Zwischen der mittleren Platte 36 und der äußeren Platte 38 ist ein ringförmiger Spalt 40 vorgesehen. An den äußeren Oberflächen der Platten 36, 38 liegt (ggf. mit einem kleinen, durch Verunreinigungen oder kleine Verwellungen bedingten Luftspalt) die Platte 28 an. An der gegenüberliegenden, in der Figur 2 links eingezeichneten Fläche der Platte 36 ist ein Permanentmagnet 42 aus einer Neodym-Eisen-Bor-Legierung mit einer um ihn herum gewickelten Spule 44 angeordnet. An der anderen Seite des Permanentmagneten 42 befindet sich ein topfförmiges Eisenjoch 46, das an der Platte 38 anliegende Schenkel 48 umfasst. Das Eisenjoch 46 wird von einem Gehäuse 50 umschlossen, das wiederum mit dem Träger 16 (s. Figur 1) verbunden ist.

Die Platte 28 des fahrzeugseitigen Kupplungselements 26 umfasst eine erste Positionierhilfe 52, die als konischer Kegelstumpf ausgeführt ist und sich im gekuppelten Zustand in eine passende Öffnung 54 zwischen der Platte 38 und dem Gehäuse 50 erstreckt. Die Platte 28 des fahrzeugseitigen Kupplungselements 26 weist weiterhin eine Stufe 56 auf, die sich in eine entsprechende Vertiefung 58 im Gehäuse 50 erstreckt.

Ein erster Sensor 60 des fahrzeugseitigen Kupplungselements 26 ist innerhalb des ringförmigen Spalts 40 angeordnet und erfasst den Abstand zur Platte 28. Ein zweiter Sensor 62 des fahrzeugseitigen Kupplungselements 26 ist an einem Schenkel 48 des Eisenjochs 46 befestigt. Der zweite Sensor 62 ist ein Hallsensor mit einem stromdurchflossenen Halbleiterelement, das eine zur magnetischen Flussdichte im Schenkel 48 proportionale Ausgangsspannung liefert. Die Sensoren 60, 62 und die Spule 44 sind mit einer Steuerung 64 (s. Figur 1) verbunden, die außerdem mit einer Eingabeeinrichtung 70 verbunden ist, die im Bereich des Arbeitsplatzes 66 eines Bedieners in einer Fahrerkabine 68 positioniert ist. Die Eingabeeinrichtung 70 ermöglicht eine Auswahl eines ersten Betriebszustands des Kupplungssystems 14, in dem es geöffnet ist, und eines zweiten Betriebszustands, in dem das Kupplungssystem 14 geschlossen ist oder kein arbeitsgeräteseitiges Kupplungselement 26 am fahrzeugseitigen Kupplungselement 18 angekuppelt ist.

Schließlich ist zwischen dem Eisenjoch 46 (bzw. einem anderen, geeigneten Befestigungspunkt am Gehäuse 50, der insbesondere durch eine Öffnung im Eisenjoch 46 hindurch mit dem Zylinder 72 verbunden ist) und dem Spalt 40 ein hydraulischer Zylinder 72 vorgesehen.

Nach alledem ergibt sich folgende Funktionsweise des Kupplungssystems 14. Veranlasst der Fahrer über die Eingabeeinrichtung 70 ein Öffnen des Kupplungssystems 14, übermittelt die Eingabeeinrichtung 70 ein entsprechendes Signal an die Steuerung 64. Die Steuerung 64 veranlasst, dass die Spule 44 mit einem elektrischen Strom geeigneter Richtung und Intensität beaufschlagt wird, der hinreicht, den Permanentmagneten 42 temporär zu entmagnetisieren. Ein vorher vorhandenes Magnetfeld, das die Platte 28 des arbeitsgeräteseitigen Kupplungselements 26 zunächst am fahrzeugseitigen Kupplungselement 18 festgehalten hat, bricht dann zusammen. Das arbeitsgeräteseitige Kupplungselement 26 kann vom fahrzeugseitigen Kupplungselement 18 abgezogen werden; das Kupplungssystem 14 wird getrennt. Ist das Arbeitsgerät 12 abgekuppelt, kann der Bediener eine Eingabe zum Schließen des Kupplungssystems 14 an die Eingabeeinrichtung 70 geben, damit die Steuerung 64 die Spule 44 wieder stromlos schaltet und Energie gespart wird.

Soll das Arbeitsgerät 12 oder ein anderes Arbeitsgerät wieder an das Fahrzeug 10 gekoppelt werden, veranlasst der Bediener mittels einer entsprechenden Eingabe in die Eingabeeinrichtung 70, dass die Steuerung die Spule 44 mit einem Strom beaufschlagt und den Permanentmagneten 42 entmagnetisiert. Das arbeitsgeräteseitige Kupplungselement 26 kann von Hand oder durch Zurücksetzen des Fahrzeugs 10 an das fahrzeugseitige Kupplungselement 18 herangeführt werden. Die Positionierhilfen 52, 56 des arbeitsgeräteseitigen Kupplungselements 26 erleichtern im Zusammenwirken mit den zugehörigen Öffnungen 54, 58 des fahrzeugseitigen Kupplungselements 18, dass die Kupplungselemente 18, 26 ohne Schwierigkeit in eine optimal ausgerichtete Relativposition verbracht werden können.

Der Bediener kann nunmehr durch eine entsprechende Eingabe in die Eingabeeinrichtung 70 das Schließen des Kupplungssystems 14 veranlassen. Dann schaltet die Steuerung 64 den Strom durch die Spule 44 wieder ab, was zu einer Wiederherstellung des vom Permanentmagneten 42 erzeugten Magnetfelds führt. Es entstehen geschlossene magnetische Feldlinien, die jeweils durch die Platte 36, die Platte 28, die Platte 38, den Schenkel 48, das Eisenjoch 46 und den Permanentmagneten 42 führen und die Platte 28 und damit das arbeitsgeräteseitige Kupplungselement 26 fest am fahrzeugseitigen Kupplungselement 18 halten.

Der Sensor 60 überwacht den Abstand zwischen der Platte 28 und dem fahrzeugseitigen Kupplungselement 18, beispielsweise auf optische (Laserinterferenz), magnetische (induktiv) oder mechanische Weise (Fühler, dessen Position mittels eines Potentiometers erfasst wird). Ist dieser Abstand größer als ein vorbestimmter Schwellenwert, veranlasst die Steuerung 64, dass dem Bediener ein akustisches oder optisches Warnsignal gegeben wird. Dadurch wird verhindert, dass der Luftspalt zwischen den Platten 28 einerseits und 36, 38 andererseits durch Verunreinigungen und/oder Verformung der Platten 28 und/oder 36 bzw. 38 ein zur Erreichung einer bestimmten Haltekraft zulässiges Maß überschreitet und zum unerwünschten Ablösen der Kupplung führt. Analog überwacht der Sensor 62 den magnetischen Fluss im Schenkel 48 des Eisenjochs 46. Unterschreitet der Fluss luftspaltbedingt einen Grenzwert, veranlasst die Steuerung 64 ebenfalls das beschriebene Warnsignal und/oder unterbindet selbsttätig den Fahrbetrieb.

Zur weiteren Verbesserung der Sicherheit kann der Zylinder 72 dienen, der nach dem Schließen der Kupplung durch geeignete Ventile von der Steuerung 64 beaufschlagt werden kann und eine Testkraft bereitstellt, die bestrebt ist, die Kupplungselemente 18, 26 zwangsweise zu trennen. Die Testkraft überschreitet die im Betrieb zu erwartende Zugkraft. Übersteht das Kupplungssystem 14 diesen Test, was mittels der Sensoren 60 und/oder 62 überprüft werden kann, ist von einer hinreichend sicheren Funktion des Kupplungssystems 14 auszugehen. Die Steuerung 64 kann dann einen Fahrbetrieb des Fahrzeugs 10 ermöglichen, während sie ihn bei negativem Testausgang unterbindet und dem Fahrer ein Warnsignal übermittelt.

Es wäre auch denkbar, zusätzlich zu den Sensoren 60, 62 und dem Zylinder 72 (oder alternativ dazu) nach dem Bereitstellen des Magnetfelds das Kupplungssystem 14 und damit das Arbeitsgerät 12 mittels einer Hubeinrichtung (nicht eingezeichnet) des Fahrzeugs 10 anzuheben oder das Arbeitsgerät 12 über eine gewisse Entfernung, z. B. 20 m, zu ziehen. Ist die Kupplung auch nach dem Test noch geschlossen, wird das Magnetfeld erhöht, um eine definierte Sicherheit gegen unbeabsichtigtes Lösen des Kupplungssystems 14 zu erreichen.

In einer anderen Ausführungsform könnte der Permanentmagnet 42 durch einen ferromagnetischen Kern ersetzt werden. Der dann entstehende Elektromagnet wäre immer dann zu bestromen, wenn die Kupplung geschlossen sein soll.

Die Platten 28 einerseits und 36, 38 andererseits erstrecken sich quer zur Zugkraft. Dadurch ist ein unerwünschtes Trennen der Kupplung durch die Zugkraft nicht zu befürchten.

Da überstehende Positionierhilfen 52, 56 nur arbeitsgeräteseitig vorgesehen sind, können auch dort Kupplungselemente 26 ohne Positionierhilfen verwendet werden. Kompatibilitätsprobleme sind demnach nicht zu erwarten. Ein Kupplungselement 26 kann problemlos auch nachträglich hergestellt werden.

Um zu verhindern, dass sich ein das fahrzeugseitige Kupplungselement 26 haltender Bediener verletzt, der möglicherweise Körperteile zwischen die Kupplungselemente 18, 26 hält, wenn ein zweiter Bediener die Eingabeeinrichtung 70 bedient, könnte letztere auch an die Rückseite des Fahrzeugs 10 verlegt werden.

## Patentansprüche

1. Kupplungssystem zur Herstellung einer trennbaren Verbindung zwischen einem Fahrzeug und einem Arbeitsgerät oder einem anderen Fahrzeug oder einem Fahrzeugteil oder zwischen Fahrzeugteilen, mit einem fahrzeugseitigen Kupplungselement (18) und einem arbeitsgeräteseitigen Kupplungselement (26), wobei eines der Kupplungselemente (18) einen ein- und ausschaltbaren Magnet (42) umfasst, während das andere Kupplungselement (26) ein ferromagnetisches Material umfasst, so dass die Kupplungselemente (18, 26) lösbar magnetisch aneinander fixierbar sind, **dadurch gekennzeichnet, dass** zwischen den Kupplungselementen (18, 26) formschlüssig wirkende Positionierhilfen (52, 56) vorgesehen sind.

2. Kupplungssystem nach Anspruch 1, **dadurch gekennzeichnet, dass** das fahrzeugseitige Kupplungselement (18) mit dem Magnet (42) ausgestattet ist, während das arbeitsgeräteseitige Kupplungselement (26) das ferromagnetische Material umfasst.

3. Kupplungssystem nach Anspruch 1 oder 2, **dadurch gekennzeichnet, dass** die Positionierhilfen (52, 56) Kanten, Stufen, Keile oder Kegelstümpfe umfassen.

4. Kupplungssystem nach einem der Ansprüche 1 bis 3, **dadurch gekennzeichnet, dass** der Magnet (42) ein Elektromagnet oder ein Elektropermanentmagnet oder ein durch Fremdkraft bewegbarer Permanentmagnet ist.

5. Kupplungssystem nach einem der Ansprüche 1 bis 4, **dadurch gekennzeichnet, dass** ein Sensor (60, 62) zur Überprüfung des Luftspalts zwischen den Kupplungselementen (18, 26) vorhanden ist.

6. Kupplungssystem nach Anspruch 5, **dadurch gekennzeichnet, dass** der Sensor (60, 62) betreibbar ist, um den Luftspalt direkt zu erfassen und/oder die magnetische Flussdichte im Magnetkreis zu erfassen.

7. Kupplungssystem nach Anspruch 5 oder 6, **dadurch gekennzeichnet, dass** eine mit dem Sensor (60, 62) verbundene Steuerung (64) betreibbar ist, um bei Überschreitung eines vorgegebenen Maximalabstands oder Unterschreitung einer vorgegebenen Mindestflussdichte ein Warnsignal zu geben und/oder eine Sicherheitsfunktion auszulösen.

8. Kupplungssystem nach einem der Ansprüche 1 bis 7, **dadurch gekennzeichnet, dass** die Flussdichte des Magnetfelds mindestens zwei unterschiedlich hohe Werte annehmen kann.

9. Kupplungssystem nach Anspruch 8, **dadurch gekennzeichnet, dass** die Flussdichte auf einen ersten Wert bringbar ist, dass dann ein Haltekrafttest durchführbar ist, beispielsweise durch Anheben oder Ziehen des Arbeitsgeräts (12) entlang einer bestimmten Strecke, und dass nach Bestehen des Haltekrafttests die Flussdichte auf einen zweiten Wert bringbar ist, der höher ist als der erste Wert.

10. Kupplungssystem nach einem der Ansprüche 1 bis 9, **dadurch gekennzeichnet, dass** ein Mechanismus, beispielsweise ein Hydraulikzylinder (72), zum Aufbringen einer Testkraft vorgesehen ist, die größer ist als die zu erwartende Betriebskraft.

11. Kupplungssystem nach einem der Ansprüche 1 bis 10, **dadurch gekennzeichnet, dass** die aneinander zum Anliegen kommenden Flächen der Kupplungselemente (18, 26) quer zur Kraftflussrichtung angeordnet sind.

12. Kupplungssystem nach einem der Ansprüche 1 bis 11, **dadurch gekennzeichnet, dass** der Ankupplungsvorgang oder der Abkupplungsvorgang zwischen dem fahrzeugseitigen Kupplungselement (18) und dem arbeitsgeräteseitigen Kupplungselement (26) durch das Magnetfeld eines Magnets (42) begünstigbar oder bewirkbar ist.

13. Kupplungssystem nach Anspruch 12, **dadurch gekennzeichnet, dass** die Kupplungselemente (18, 26) **dadurch** aneinander kuppelbar sind, dass das fahrzeugseitige Kupplungselement (18) derart an das arbeitsgeräteseitige Kupplungselement (26) annäherbar ist, dass das das ferromagnetische Material aufweisende Kupplungselement (26) bei aktiviertem Magnet (42) von dem den Magnet (42) aufweisenden Kupplungselement (16) anziehbar ist.

14. Kupplungssystem nach Anspruch 13, **dadurch gekennzeichnet, dass** mindestens ein Führungsmittel vorgesehen ist, mit welchem eine Annäherung der beiden Kupplungselemente (18, 26) derart führbar ist, dass die beiden Kupplungselemente (18, 26) zumindest nahezu in ihre endgültige Kupplungsposition bringbar sind.

15. Kupplungssystem nach einem der Ansprüche 1 bis 14, **dadurch gekennzeichnet, dass** die Kupplungselemente (18, 26) mechanisch aneinander fixierbar sind, beispielsweise durch einen elektromagnetisch, mechanisch oder hydraulisch betätigbaren Sicherungsbolzen.

16. Kupplungssystem nach einem der Ansprüche 12 bis 15, **dadurch gekennzeichnet, dass** nach hergestellter Kupplung zwischen den Kupplungselementen (18, 26) der Magnet (42) ausschaltbar ist.

17. Kupplungssystem nach einem der Ansprüche 12 bis 16, **dadurch gekennzeichnet, dass** der Magnet (42) derart aktivierbar ist, dass eine Abstoßungskraft zwischen dem fahrzeugseitigen Kupplungselement (18) und dem arbeitsgeräteseitigen Kupplungselement (26) wirkt, so dass die Kupplungselemente (18, 26) durch die Abstoßungskraft voneinander abkuppelbar sind.

18. Kupplungssystem nach einem der Ansprüche 12 bis 17, **dadurch gekennzeichnet, dass** ein weiterer Magnet vorgesehen und derart ausgebildet bzw. angeordnet ist, dass eine mechanische Fixierung der Kupplungselemente (18, 26) durch Aktivierung des weiteren Magnets lösbar oder zumindest ein Lösen der mechanischen Fixierung begünstigbar ist.

19. Kombination aus einem Fahrzeug (10), insbesondere einem landwirtschaftlichen Fahrzeug, beispielsweise einem Traktor, einem Trägerfahrzeug, einer Zugmaschine oder einer Erntemaschine, und/oder mindestens einem Arbeitsgerät (12), beispielsweise einem Bodenbearbeitungsgerät, einer Sämaschine, einem Düngerstreuer, einer Feldspritze, einer Ballenpresse, einem Anhänger oder einem Erntevorsatz, und einem Kupplungssystem (14) nach einem der vorhergehenden Ansprüche.

## Claims

1. Hitch system for producing a disconnectable connection between a vehicle and an implement or another vehicle or a vehicle component or between vehicle components, having a vehicle-side hitch element (18) and an implement-side hitch element (26), wherein one of the hitch elements (18) comprises a magnet (42) which can be switched on and off, while the other hitch element (26) comprises a ferromagnetic material, with the result that the hitch elements (18, 26) can be magnetically secured to one another in a releasable fashion, **characterized in that** positioning aids (52, 56) which act in a positively locking fashion are provided between the hitch elements (18, 26).

2. Hitch system according to Claim 1, **characterized in that** the vehicle-side hitch element (18) is equipped with the magnet (42) while the implement-side hitch element (26) comprises the ferromagnetic material.

3. Hitch system according to Claim 1 or 2, **characterized in that** the positioning aids (52, 56) comprise edges, steps, wedges or truncated cones.

4. Hitch system according to one of Claims 1 to 3, **characterized in that** the magnet (42) is an electromagnet or an electropermanent magnet or a permanent magnet which can be moved by extraneous force.

5. Hitch system according to one of Claims 1 to 4, **characterized in that** a sensor (60, 62) is provided for checking the air gap between the hitch elements (18, 26).

6. Hitch system according to Claim 5, **characterized in that** the sensor (60, 62) can be operated in order to sense the air gap directly and/or to sense the magnetic flux density in the magnetic circuit.

7. Hitch system according to Claim 5 or 6, **characterized in that** a controller (64) which is connected to the sensor (60, 62) can be operated in order to output a warning signal and/or trigger a safety function when a predefined maximum distance is overshot or a predefined minimum flux density is undershot.

8. Hitch system according to one of Claims 1 to 7, **characterized in that** the flux density of the magnetic field can assume at least two values of different magnitudes.

9. Hitch system according to Claim 8, **characterized in that** the flux density can be adjusted to a first value, **in that** a holding force test can then be carried out, for example by raising or pulling the implement (12) for a specific distance, and **in that**, after the holding force test has been passed, the flux density can be adjusted to a second value which is higher than the first value.

10. Hitch system according to one of Claims 1 to 9, **characterized in that** a mechanism, for example a hydraulic cylinder bracket (72), is provided for applying a test force which is greater than the expected operating force.

11. Hitch system according to one of Claims 1 to 10, **characterized in that** the faces of the hitch elements (18, 26) which come to bear one against the other are arranged transversely with respect to the direction of force flow.

12. Hitch system according to one of Claims 1 to 11, **characterized in that** the coupling process or the decoupling process between the vehicle-side hitch element (18) and the implement-side hitch element (26) can be promoted or brought about by means of the magnetic field of a magnet (42).

13. Hitch system according to Claim 12, **characterized in that** the hitch elements (18, 26) can be coupled to one another by virtue of the fact that the vehicle-side hitch element (18) can be made to approach the implement-side hitch element (26) in such a way that, when the magnet (42) is activated, the hitch element (26) which has the ferromagnetic material can be attracted by the hitch element (16) which has the magnet (42).

14. Hitch system according to Claim 13, **characterized in that** at least one guiding means is provided with which the two hitch elements (18, 26) can be made to approach one another in such a way that the two hitch elements (18, 26) can be moved at least virtually into their final coupling position.

15. Hitch system according to one of Claims 1 to 14, **characterized in that** the hitch elements (18, 26) can be secured to one another mechanically, for example by means of a securing bolt which can be activated electromagnetically, mechanically or hydraulically.

16. Hitch system according to one of Claims 12 to 15, **characterized in that,** after the hitch elements (18, 26) have been coupled, the magnet (42) can be switched off.

17. Hitch system according to one of Claims 12 to 16, **characterized in that** the magnet (42) can be activated in such a way that a repulsion force acts between the vehicle-side hitch element (18) and the implement-side hitch element (26) with the result that the hitch elements (18, 26) can be decoupled from one another by means of the repulsion force.

18. Hitch system according to one of Claims 12 to 17, **characterized in that** a further magnet is provided and is embodied and/or arranged in such a way that a mechanically secured connection between the hitch elements (18, 26) can be released, or at least release of the mechanically secured connection can be promoted, by activating the further magnet.

19. Combination of a vehicle (10), in particular an agricultural vehicle, for example a tractor, a carrier vehicle, a tractive machine or a harvesting machine, and/or at least one implement (12), for example a soil processing device, a seeder, a manure spreader, a field sprayer, a bale press, a trailer or a harvesting attachment, and a hitch system (14) as claimed in one of the preceding claims.

## Revendications

1. Système d'accouplement pour réaliser une connexion séparable entre un véhicule et un engin de travail ou un autre véhicule ou une partie de véhicule ou entre des parties de véhicule, comprenant un élément d'accouplement (18) du côté du véhicule, et un élément d'accouplement (26) du côté de l'engin de travail, l'un des éléments d'accouplement (18) comprenant un aimant (42) pouvant être connecté ou déconnecté, tandis que l'autre élément d'accouplement (26) comprend un matériau ferromagnétique, de sorte que les éléments d'accouplement (18, 26) puissent être fixés l'un à l'autre magnétiquement de manière amovible, **caractérisé en ce qu'**entre les éléments d'accouplement (18, 26) sont prévus des auxiliaires de positionnement (52, 56) agissant par engagement par correspondance géométrique.

2. Système d'accouplement selon la revendication 1, **caractérisé en ce que** l'élément d'accouplement (18) du côté du véhicule est équipé de l'aimant (42), tandis que l'élément d'accouplement (26) du côté de l'engin de travail comprend le matériau ferromagnétique.

3. Système d'accouplement selon la revendication 1 ou 2, **caractérisé en ce que** les auxiliaires de positionnement (52, 56) comprennent des arêtes, des étages, des coins ou des troncs de cônes.

4. Système d'accouplement selon l'une quelconque des revendications 1 à 3, **caractérisé en ce que** l'aimant (42) est un électroaimant ou un électroaimant permanent ou un aimant permanent déplaçable par une force extérieure.

5. Système d'accouplement selon l'une quelconque des revendications 1 à 4, **caractérisé en ce qu'**un capteur (60, 62) est prévu pour contrôler l'entrefer entre les éléments d'accouplement (18, 26).

6. Système d'accouplement selon la revendication 5, **caractérisé en ce que** le capteur (60, 62) peut fonctionner pour détecter directement l'entrefer et/ou pour détecter la densité de flux magnétique dans le circuit magnétique.

7. Système d'accouplement selon la revendication 5 ou 6, **caractérisé en ce qu'**une commande (64) connectée au capteur (60, 62) peut fonctionner de manière à délivrer un signal d'alarme et/ou à déclencher une fonction de sécurité en cas de dépassement d'une distance maximale prédéfinie ou en dessous d'une densité de flux magnétique prédéfinie.

8. Système d'accouplement selon l'une quelconque des revendications 1 à 7, **caractérisé en ce que** la densité de flux du champ magnétique peut prendre au moins deux valeurs d'intensité différente.

9. Système d'accouplement selon la revendication 8, **caractérisé en ce que** la densité de flux peut être amenée à une première valeur, **en ce qu'**un test de force de maintien peut être réalisé, par exemple en soulevant ou en tirant l'engin de travail (12) le long d'une distance déterminée, et **en ce qu'**après le test de force de maintien, la densité de flux peut être amenée à une deuxième valeur qui est supérieure à la première valeur.

10. Système d'accouplement selon l'une quelconque des revendications 1 à 9, **caractérisé en ce qu'**il est prévu un mécanisme, par exemple un vérin hydraulique (72), pour appliquer une force de test, qui est supérieure à la force de fonctionnement attendue.

11. Système d'accouplement selon l'une quelconque des revendications 1 à 10, **caractérisé en ce que** les surfaces des éléments d'accouplement (18, 26) venant s'appliquer les unes contre les autres sont disposées transversalement à la direction de flux de la force.

12. Système d'accouplement selon l'une quelconque des revendications 1 à 11, **caractérisé en ce que** l'opération d'accouplement ou de désaccouplement entre l'élément d'accouplement (18) du côté du véhicule et l'élément d'accouplement (26) du côté de l'engin de travail peut être favorisée ou effectuée par le champ magnétique d'un aimant (42).

13. Système d'accouplement selon la revendication 12, **caractérisé en ce que** les éléments d'accouplement (18, 26) peuvent être accouplés les uns aux autres par le fait que l'élément d'accouplement (18) du côté du véhicule peut être rapproché de l'élément d'accouplement (26) du côté de l'engin de travail, de telle sorte que l'élément d'accouplement (26) présentant le matériau ferromagnétique puisse être rapproché de l'élément d'accouplement (18) présentant l'aimant (42) lorsque l'aimant (42) est activé.

14. Système d'accouplement selon la revendication 13, **caractérisé en ce qu'**il est prévu au moins un moyen de guidage avec lequel on peut effectuer un rapprochement des deux éléments d'accouplement (18, 26) de telle sorte que les deux éléments d'accouplement (18, 26) puissent être amenés au moins approximativement dans leur position d'accouplement finale.

15. Système d'accouplement selon l'une quelconque des revendications 1 à 14, **caractérisé en ce que** les éléments d'accouplement (18, 26) peuvent être fixés mécaniquement les uns aux autres, par exemple par un boulon de fixation à commande électromagnétique, mécanique ou hydraulique.

16. Système d'accouplement selon l'une quelconque des revendications 12 à 15, **caractérisé en ce que** l'aimant (42) peut être déconnecté après la réalisation de l'accouplement entre les éléments d'accouplement (18, 26).

17. Système d'accouplement selon l'une quelconque des revendications 12 à 16, **caractérisé en ce que** l'aimant (42) peut être activé de telle sorte qu'une force de repoussement agit entre l'élément d'accouplement (18) du côté du véhicule et l'élément d'accouplement (26) du côté de l'engin de travail, de sorte que les éléments d'accouplement (18, 26) puissent être déconnectés l'un de l'autre par la force de repoussement.

18. Système d'accouplement selon l'une quelconque des revendications 12 à 17, **caractérisé en ce qu'**un autre aimant est prévu et est réalisé ou disposé de telle sorte qu'une fixation mécanique des éléments d'accouplement (18, 26) puisse être desserrée par l'activation de l'aimant supplémentaire ou qu'au moins un desserrage de la fixation mécanique puisse être favorisé.

19. Combinaison d'un véhicule (10), en particulier un véhicule agricole, par exemple un tracteur, un véhicule de support, une machine de traction ou une machine de récolte et/ou d'au moins un engin de travail (12), par exemple un engin de travail du sol, une semeuse, un engin d'épandage, une machine de pulvérisation des champs, une presse à balles, une remorque ou un auxiliaire de récolte, et d'un système d'accouplement (14) selon l'une quelconque des revendications précédentes.
